# EUROPEAN PATENT SPECIFICATION

(11) **EP 3 042 969 B1**
(45) Date of publication and mention of the grant of the patent: **13.11.2019**
(21) Application number: 16150733.0
(22) Date of filing: 11.01.2016
(51) Int. Cl.: C22B 1/14, C22B 3/06, C22B 3/18, C22B 15/00, C08L 23/12

(54) **METHOD OF LEACHING OF MINERALS CONCENTRATES**
VERFAHREN ZUR LAUGUNG VON MINERALIENKONZENTRATEN
PROCÉDÉ DE LIXIVIATION DE CONCENTRÉS MINÉRAUX

(30) Priority: 09.01.2015 CL 2015000059
(43) Date of publication of application: 13.07.2016
(73) Proprietor: Sociedad Punta del Cobre S.A, Santiago (CL)
(72) Inventor: Rivadeneira Hurtado, Juan, Santiago (CL)
(74) Representative: Chas. Hude A/S

(56) References cited:
- JP-A- 2004 052 002
- JP-B2- 2 879 897
- US-A- 6 107 065
- US-B1- 6 610 268

## Description

### FIELD OF THE INVENTION

The present invention is related to a leaching method of metal bearing material or metal mineral concentrates involving a support material to agglomerate mineral concentrates that permits the subsequent recovery of their metals of economical value via leaching. More specifically, it refers to the use of a support comprising polypropylene particles that are between 3 and 20 mm, non-porous, with a specific gravity less than 1, stable in highly corrosive environments such as strong acid solutions, resistant to abrasions, non-deformable at temperatures of up to 100°C, with the capacity for mineral concentrates to stably stick as a fine layer on the support's surface forming an agglomerate, via a physical process that allows said concentrate to agglomerate, such as by using a rotary drum.

### BACKGROUND OF THE INVENTION

The reserves of oxidized minerals of high grade copper will continue to diminish in Chile and other parts of the world which in turn will cause the closure or diminish the operative capacity of the majority of the acid leaching operating plants within the next decade. As a result, other alternatives will be sought after, such as solvent extraction (SX) and electrowinning (EW) installations required to concentrate and eletrodeposit the copper contained in the rich pregnant leach solutions (PLS) and charged electrolyte, respectively. In addition, due to the decrease in the exploitation of oxidized copper mineral resources, a significant increase in the exploitation of copper sulfide minerals can be foreseen in Chile. These minerals are normally treated by milling and flotation to generate high concentrations of copper sulfide minerals, which must be later treated by smelting. Currently, approximately 80% of the copper produced in Chile is via pyrometallurgy used in smelting plants. Concentrations of chalcopyrite (CuFeS₂) are exclusively refined by this method. However, this method possesses inherent problems such as: high capital investment which limits the economically feasible exploitation of copper to only large copper reserves; elevated operating costs; and large volumes of SO₂ gas emissions that require complex and costly processes in order for the emission to be purified and finally SO₂ is recovered in the form of sulfuric acid (H₂SO₄), and if this sulfuric acid cannot be sold, it must be neutralized before it can be disposed of in an environmentally safe manner. Smelting plants, in turn, present problems with the emission of metallic dust, fugitive gases, and residual acidic solutions with high contents of Pb, As, Sb, Cu, Zn, Hg, Bi and Se that prevent the treatment of copper minerals with high concentrations of these contaminants. As a result, enormous reserves of copper sulfide minerals, such as enargite minerals (Cu₃AsS₄) for example, are not suitable for exploitation and treatment.

The largest proportion of mineralized copper as primary and secondary copper sulfides is found in the form of chalcopyrite. Table 1 shows in ascending order the sulfide minerals that are the most resistant to be leached. As it can be seen, chalcopyrite is in the second to last place and as a practical consequence it is the most recalcitrant copper mineral to be leached, requiring high temperatures and pressure to be dissolved.

**Table 1: Minerals according to its ascending resistance to oxidation**

| | |
|---|---|
| Pyrrhotite | FeS |
| Chalcocite | Cu₂S |
| Covellite | CuS |
| Tetrahedrite | 3Cu₂S.Sb₂S₃ |
| Bornite | Cu₅FeS₄ |
| Galena | PbS |
| Arsenopyrite | FeAsS |
| Sphalerite | ZnS |
| Pyrite | FeS₂ |
| Enargite | Cu₃AsS₄ |
| Marcasite | FeS₂ |
| Chalcopyrite | CuFeS₂ |
| Molybdenite | MoS₂ |

Due to the difficulties and the restrictions of the pyrometallurgy route, hydrometallurgy alternatives have been developed for the processing of mineral concentrates.

Among the diverse technologies of hydrometallurgy, bioleaching is an attractive alternative. Bioleaching is a solubilization methodology of metal extraction starting from the oxidation of a complex mineral matrix, using the direct or indirect action of microorganisms. Various microorganisms cable of such feats are known in the art as biological leaching agents. These microorganisms, in general, are capable of oxidizing some compounds such as iron ferrous and sulfur. The bacterial oxidation of minerals is a term applied to the microbiological solubilization of the contents of a mineral either to solubilise the valuable metal (i.e. bioleaching process) for subsequent recovery from the leachate, or to the removal of at least some of the minerals/elements that accompany the metal of interest (i.e. biooxidation process).

The majority of commercially used biological leaching agents suitable for use in a bioleaching process are acidophilic mesophilic bacteria which are mostly found in environments of high acidity and moderate temperatures (20-30 °C). However, in recent decades a series of studies and processes have been developed with extreme thermophilic microorganisms isolated from hot springs and metallurgical processes, which live in environments of high salinity and temperatures above 60 °C. These microorganisms have shown to be more efficient in the dissolution of recalcitrant minerals than mesophilic bacteria.

There are various factors that affect the leaching and recovery of the metals of interests. The most important ones are: the type of reactor used, which in the case of the current invention include but are not limited to heap, dump, stirred-tank or pressure leaching; the granulometry and dispersion of the fine material; the presence of clay and complex calcareous impurities; the operating temperature of the reactor; the pH and the concentration of free acid in the leaching solutions; the type of mineral to be leached; and the ion concentration of potential inhibitors; among others.

One of the advantages of implementing systems of bioleaching and the recovery of metals of interests is that microbial extraction processes of metals present fewer risks for the environment than other metallurgy processes. The reason is that bioleaching processes do not require such intensive amounts of energy and do not produce sulfur dioxide nor other damaging gases. This permits the processing of mineral concentrates with large amounts of impurities.

It is known that the leaching of chalcopyrite minerals, and in general primary copper sulfides and iron sulfides, is not amenable to acid attack in heap leaching at an ambient temperature. This is due to the rapid passivation of the leached mineral by a layer of precipitates that forms on the surface of the mineral. These surface deposits significantly reduce the recovery of copper by bioleaching. The formation of this passive layer varies greatly, depending on conditions such as variations of temperature, pH and oxygen concentration of the bed or the heap. To reduce the formation of this passive layer, different leaching technologies for chalcopyrite, some of which are physical-chemical in nature, have been developed, such as pressure leaching for copper concentrates. Through the high pressure application of oxygen in an autoclave and a controlled adjustment in temperature, a much faster oxidation reaction can be achieved in matters of minutes to hours, and the formation of sulfur is present at the end of the process either in the form of elemental S or sulfate SO₄²⁻. The disadvantages of these pressure reactors is their high capital investment and operating costs, and so they have only been successfully used on a commercial scale in oxidative processing of minerals that contain some of the highest value metals; gold, silver, or molybdenite. This is due to the fact that pure pressurized oxygen is used as the reagent, generation of which demands enormous consumption of electrical energy, thus greatly elevating the operating costs. Another technology, more chemical in nature, is one developed by Compañía Minera Michilla S.A., controlled by Antofagasta PLC, called CUPROCLOR®. This technology is applied for the leaching of copper sulfides in heaps using an excess of chloride ions in a leaching solution, (such as 90 g/L total chloride ions, of which 30 g is typically contributed by the use of sea water and the remaining 60 g in the form of calcium chloride). The technology allows the presence of two redox couples Cu(II)/Cu(I) and Fe(III)/Fe(II) in solution and simultaneously avoids the formation of the passive layer of precipitates described above, resulting in high percentages of copper recovery (sometimes as high as 95%). However, this model is not easily reproducible when attempting to transform other oxidation leaching plants into sulfide processing plants.

Even though the bioleaching technology of primary copper sulfides at high temperatures offers an economical and environmentally friendly solution to the recovery problems generated by the formation of a passive layer on the surface of a particle during leaching, this technology has not been applied commercially for the bioleaching of neither chalcopyrite nor enargite concentrates; whilst laboratory experiments and stirred-tank reactor trails using thermophilic microorganisms such as in the BIOCOP® process of Codelco Chile and BHP Billiton have demonstrated technical feasibility, there remains a commercial unsuitability because of the high investment costs required and the operational complexities demonstrated in the process trails

In general, heap leaching of a layer of agglomerated concentrate on a support particle could be described as a process guided by a model of thin-layer leaching. So long as a good diffusion of oxygen is established in the bed and a high temperature in the interior of the heap leaching is maintained, the formation of jarosite precipitates on the surface of the particle to be leached can be avoided, and the leaching of copper sulfide minerals is made possible. This system, in stark contrast to stirred-tank processes, permits that the microorganisms capable of bioleaching stick to the surface of the mineral, forming a biofilm based on a matrix of microorganisms and polysaccharides secreted by the microorganisms. Said matrix allows for a more effective bioleaching of the mineral particle.

In order to reach and maintain the required temperatures to achieve the bioleaching of copper sulfide minerals, different populations of iron-oxidizing and sulfur-oxidizing bacteria with different optimal growth temperatures are preferred to be present over time, and attempts made to optimize the growth rates of the different consortia. In relation to the use of microorganisms in leaching processes, there has been a change in perspective in the last decade due to the increase in complexity as an ever increasing diversity of microorganisms present in such environments. Today, the use of various microbiological consortia are being explored instead of just a few primarily described "key" microorganisms, such as *Acidithiobacillus ferrooxidans, A. thiooxidans* or *Leptospirillum,* to which other microorganisms are added, such as *Acidianus brierley, A. thermosulfooxidans, Sulfubacillus thermosulfoxidans.* This progression has happened, in part, by the application of significant contributions generated by the investigation of the microbial ecology field that has observed a wide diversity of microorganisms to be present in the environment of mining processes.

Currently, thermophilic microorganisms (bacteria or archaea), both moderate ones (with the capacity to grow at temperatures between 50 and 60 °C) and extreme thermophiles (with the capacity to grow at temperatures above 60 °C) having demonstrated to be capable of recovering copper from chalcocite minerals, have been used at a level of physical models and at a prototype and trail scale of copper sulfide bioleaching operations. The exothermic chemical reactions carried out by metabolic activities of the microorganisms present in the biohdyrometallurgical environments of sulfide biooxidation, generate the physicochemical conditions necessary to elevate the temperatures inside the leaching reactors, observed in reactor types such as stirred-tank, heap or dump present in current mining operations.

### Bioleaching of chalcopyrite.

Chalcopyrite (CuFeS₂) is the most recalcitrant copper sulfide to oxidation. Under the influence of *A. ferrooxidans,* the speed of oxidation of this sulfide increases significantly in comparison to purely chemical processes. Secondary copper sulfides, chalcocite (Cu₂S), covellite (CuS), and bornite (Cu₅FeS₄) are more easily oxidized by direct or indirect action of bacteria. At an industrial level, the bioleaching technology has been applied in heaps (Chile, USA, Peru, etc.). Southern Peru has applied the technology for the recovery of copper in its low grade sulfides dumps of Toquepala. In Chile, Billiton and Codelco, in years past, carried out investigations to recover copper contained in arsenic minerals, a process named BIOCOP. Even though the process gave positive results from the kinetic point of view, it did not develop further into nor establish itself as a commercial process .

### Bioleaching of other metal sulfides.

Gold recovery: bacterial leaching is also used to break the sulfide matrix (mainly pyrite and/or arsenopyrite) that is found "trapped" in the gold-bearing particle, allowing the subsequent recovery of the gold through conventional cyanidation. In other words, the process is a pretreatment before the direct dissolution of the metal. Bactech, from Australia, has developed a process that uses moderately thermophilic bacteria for the treatment of sulfides and base metals known as the BACTECH process. The preliminary evaluations have reported the recovery of up to 98% of the gold contained in the mineral.

Zinc Recovery: the bacterial action in zinc sulfide has also been evaluated. Even though there are no known commercial plants, its application has enormous potential. Sphalerite is the most oxidizable zinc sulfide, influenced greatly by the presence of iron.

Lead Recovery: the bacterial leaching of galena originates generates the formation of PbSO₄ that is insoluble in an acidic medium, a property that can be applied in the separation of some valuable metals contained in a lead ore.

Nickel Recovery: Nickel is leached from sulfides (pentlandite and millerita) and of iron ores in the presence of *A. ferroocidans,* which is 2 to 17 times faster than a purely chemical process.

Antimony Recovery: There is some work that reports the ability of *At. ferrooxidans* to oxidize stibnite (SB₂S₃) at pH 1.75 and at 35°C. In addition, *At. thiooxidans* is also reported to be capable to oxidize this sulfide.

Recovery of Rare Earth Mineral Metals: The rare earth metals are present in the crystalline portion of many sulfides and silicate minerals. In order to free the metals, it is necessary to oxidize the sulfides or destroy the matrix of the silicates. Literature reports the possibility of oxidizing a variety of these metals by using bacteria from the *Acidithiobacillus* genus, such as: gallium and cadmium present in sphalerite (the main transporter of these elements); of germanium and cobalt, of rhenium, selenium and tellurium, titanium and uranium, among others.

### Previous relevant patents

Patent CN102230084 B describes a method of mineral treatment that includes stages of mineral grinding, mineral agglomeration with a adhesive, disposition in heaps and irrigation with sulfuric acid and a bacterial culture. It is important to highlight that the invention described in this patent does not include the agglomeration of the ground mineral on a support nor the maintenance of high temperatures during the leaching process.

The North American patent US 6,063,158 (MBX SYSTEMS, INC) describes an agglomeration method of mineral concentrate on a sphere shaped polyethylene matrix with a ring and a pin. The method also includes the use of *T. thiooxidans* to bioleach the agglomerated concentrate in systems of columns at ambient temperature.

The North American patent US 6,083,730 (Geobiotics Inc.) claims a method that consists of the agglomeration of a sulfide mineral concentrate on the surface of mineral particles (volcanic rock, gravel or rock) with a size that ranges from 0.6 to 2.5 cm. This material is arranged in heaps for later bioleaching.

Patent US 8,491,701 claims a bioleaching method suitable for mineral agglomerates involving the inoculation of these agglomerations with bacteria and nutrients required for bacterial growth. The patent describes that at least part of the heap leaching consists of agglomerated material. However, it does not disclose any particular agglomeration method that is suited for such bioleaching.

Patent US 8,119,085 describes a mineral leaching method that consists of grinding the mineral, agglomerating it in an agglomerator through the addition of water, a binder and an acid. Afterwards, heaps are formed which are irrigated with a solution that contains sulfur oxidizing bacteria.

Patent US 6,096,113 describes a bioleaching method in a closed tank that consists of treating part of the mineral with biooxidizing microorganisms. This pretreated mineral is then agglomerated on the non-treated mineral. The agglomeration requires the use of drying materials and flocculants in a agglomeration device. This process is directed to refractory minerals that contain precious metals, which are recovered from the oxidized product in the heap, through a heating process and then the addition of a leaching agent (such as cyanide).

Patent US 5,766,930 describes a method that mainly describes a method to bioremediate contaminated heaps of soils with organic substances, without shaking. The method consist of mixing the substrate, to be remedied, with layers of thick material selected among stones, pieces of brick, pieces of cement and plastic.

The GEOCOAT® technology consists of depositing a layer of sulfide concentrate on a support rock of a specified size, piling said material in heaps, irrigating it with solutions of acidic nutrients and providing air under low pressure to the base of the heap. After the biooxidation, the concentrate is removed from the rock support by wet sieving. The residue of the concentrate is then neutralized and subject to traditional methods of gold recovery. The support can be recycled to some extent.

Some of the disadvantages of this technology are that the substrate of the agglomeration is not completely inert to microbial action and the action of the acid. In addition, due to its mineral nature, the cost of the energy involved, both for the agglomeration and the recovery of the rock support, is by far superior to that of the technology of the present invention.

### DESCRIPTION OF THE PRESENT INVENTION

The present invention relates to a leaching method of metal bearing material or metal mineral concentrates comprising the steps:
a. Adhering mineral concentrates or a metal bearing material in a stable manner to a support to form agglomerates; wherein said support is characterized in that it is made of non porous polypropylene particles between 3 and 20 mm, of specific gravity less than 1, stable in strongly acidic solutions of pH1 - pH4, resistant to abrasion, and does not deform at temperatures up to 60°C;
b. Transporting the agglomerates to a processing site;
c. Loading the agglomerates onto a packed bed reactor or forming a heap of agglomerates;
d. Leaching the mineral concentrate or metal bearing material by irrigating with chemical and/or biological agents present in an acidic solution;
e. Optionally, supplying forced air to the reactor or heap of agglomerates in a counter-current direction relative to that of the irrigation solution;
f. Recovering the loaded solution or "PLS" that percolated in the reactor or heap for its subsequent treatment;
g. Recovering the solid residuals of the reactor or heap;
h. Separating the residual solids, unleached mineral concentrates and any formed precipitates;
i. Reusing the support in another cycle of the leaching process comprising steps d - h.

The method involves the use of a product that provides a support material which is homogeneous or of narrow size and shape distribution, has a lower density than water, and is suitable as a carrier for mineral concentrates, metal ores, or metal bearing materials to be leached in chemical or bioleaching processes. The purpose of the support is to allow the adhesion of the mineral concentrates in a stable form so that they can be treated by leaching in packed bed or heap reactors. Through the action of microorganisms or of chemicals, solutions loaded with metals of interest, contained in the concentrate matrix, can be obtained.

The support is highly amenable to recycling for repeated use in such systems. One aspect of this is that the support is composed of a material which is able to maintain its original size and shape when subjected to the accumulated weight of at least 2m, preferably at least 3m, more preferably at least 4m, more preferably at least 5m, preferably at least 6m, most preferably at least 10m, of the same support material resting on top of it. Such rigidity under pressure allows the support to be stacked in a reactor or heap of commercially relevant size for industrial leaching operations. The support must be able physically and chemically stable when incubated for at least 150 days, preferably at least 300 days, preferably 450 days, most preferably at least 600 days in a highly corrosive environment. By "highly corrosive environment" is meant a low pH and temperatures between 40°C and 100°C, optionally also with high salinity. A relevant low pH range for this application area is in the order of pH 5 to pH 0.2, preferably pH 4.5 to pH 0.2, more preferably pH4 to pH 0.2, more preferably pH 3.5 to pH 0.2, more preferably pH 3.0 to pH 0.2, more preferably pH 2.5 to pH 0.2, more preferably pH 2.0 to pH 0.2, more preferably pH 1.5 to pH 0.2, more preferably pH 1 to pH 0.2, The preferred temperature range for some aspects of the invention, within which range the support must remain physically stable (size and shape) depends on the leaching agents used, especially in the case of bioleaching agents, of which some species can only tolerate temperatures up to 40°C, preferably up to 50°C, more preferably up to 60°C, more preferably up to 70°C, more preferably up to 80°C, more preferably up to 90°C, most preferably up to 100°C. Further, not only must the support be physically and chemically stable under the above conditions encountered during the leaching process, but the support material must not be degraded or acted upon by the chemical or bioleaching agents used in the process.Suitable materials from which the support can be made include inert polymers or polymeric compounds. The support may comprise homopolymers or copolymers or mixtures thereof so long as they are thermostable up to at least 100°C. In a preferred embodiment the support material is a poylmer derived from the petrochemical industry. The support material may substantially comprise or consist of any of the following: fluoropolymers, polysiloxanes, ceramics, cured thermosetting plastic with a degradation temperature higher than 100°C,,or mixtures thereof. In the current invention, the particles are composed of polypropylene.

More specifically, is described the use of a support composed of polypropylene particles that meet the following criteria: they are between 3 and 20 mm, have a specific gravity of less than 1, are stable in highly corrosive environments such as strong acid solutions, are resistant to abrasion, are not deformable at temperatures up to 100°C, and have the capacity to hold or bind mineral concentrates on their surface to form stable agglomerates. These agglomerates are composed of polypropylene particles covered by a fine layer of mineral concentrate, and are typically obtained through a physical process encouraging agglomeration, such as through the use of a rotary drum or similar technologies.

Said supports may be packed homogeneously in a reactor or placed in a heap. This configuration of reactor or heap shows improved recoveries from mineral concentrates with high impurity contents in comparison to the leaching processes described in the previous art.

One advantage of the current invention is to produce reduced amounts of waste streams, effluents (including rubble and/or tailings) and, in general, potentially polluting and damaging emissions for the environment. In addition, the current invention reduces the energy demand to obtain metals of economic value.

Another advantage of some aspects of the current invention is that the bioleaching process itself is more sustainable than a purely chemical leaching process.

Yet another advantage of the invention is that it provides a more sustainable alternative to the treatment of mineral concentrates formerly performed using energy-demanding processes such as smelting. These processes have a higher cost of treatment, and they can be economically unfeasible to run. Therefore, the technology of the current invention can also increase the economic value of minerals such as enargite (copper arsenic sulfide, Cu3AsS₄) and relatively impure mineral ores.

The support used in the application of the present invention includes polypropylene particles between 3 and 20 mm, and resistant to temperatures up to 100°C and high acidity (such as pH3, preferably pH2.5, more preferably pH2, even more preferably pH1.5, most preferably pH1).

The preferred shapes of the polypropylene support can be lenticular, spherical, oval, concave, convex, squared, cylindrical (pellet), rectangular, and/or irregular. Whichever shape the support takes, it is highly preferred that it comprises rounded edges. Provided it can float on water, the support may be hollow or solid or have a higher density hard shell layer and a lower density inner core. The support may have a smooth outer surface or a rough surface. A smooth surface has the advantage of easier cleaning during the recycling phase, a rough surface has the advantage of increasing surface area for loading mineral concentrates and growth of biofilms. A striated or pitted surface on the support particles is preferred in some aspects of the current invention. The support may comprise a mixture of any or all of the above features, but a homogeneous mixture of support particles is preferred for use in heaps or reactors.

Some aspects of the present invention relate to methods of chemical leaching and/or bioleaching utilising an agglomeration substrate that is inert to temperature up to 100C, acidity down to a pH of 0.2, and microbial activity, and has a density less than water. This last characteristic permits that the substrate be more easily recovered for its reuse. Preferably the agglomeration support is uniform in size. Preferably the agglomeration support has rounded edges. Most preferably the agglomeration support takes the form of a homogeneous population of particles. The support is expected to bind to the greatest amount of agglomerated concentrate on its surface without blocking the circulation of the liquid/air in the porous channels of the packed bed.

Once the oxidation or leaching process of the agglomerated concentrate has occured around the support particles, the particles may be reused for a new agglomeration/leaching cycle in the reactor. The particles may be optionally washed with diluted acid or water and easily removed from the washing solution since their specific gravity is less than 1, and they float to the surface.The concentrate that did not react, along with any other solid mineral washed from the support particles may be recovered, thickened, and filtered for use or sale as re-concentrated minerals. This way the waste streams, which other leaching technologies have, are decreased and to some extent monetized.

Generally, in processes where minerals are treated via chemical leaching and bioleaching, the mechanical and hydraulic properties of the leaching reactors in heaps are fundamental in ensuring high recoveries. This is achieved by agglomerating the fine mineral particles around the larger particles of the same mineral. This results in going from a system where the fine and coarse particles are scattered, to one where the new agglomerated particles become the dominant typed inside the reactor, maximizing the hydraulic and gaseous conductivity of the bed of the reactor, thus improving the total kinetics of recovery of the oxidizable metallic contents.

### Metal bearing material

The metal bearing material may be a mineral concentrate, a metal ore, or a waste product containing a valuable metal of interest. Traditional metal ores are typically rocks with minerals containing metals. The concentration of the metal mineral in the rock determines the "grade" of the ore. High grade ores have relatively high concentrations of metal oxides, sulfides, silicates or native metals. Historically, lower grade ores and mineral concentrates have proved not to be commercially viable sources for metal extraction using old technologies. In aspects of the current invention, metal yielding materials may contain one or more of the minerals including but not limited to: Acanthite, Barite, Bauxite, Beryl, Bornite, Chalcocite, Chalcopyrite, Chromite, Cinnabar, Cobaltite, Columbite-Tantalite, Coltan, Dolomite, Galena, Hematite, Ilmenite, Magnetite, Malachite, Molybdenite, Pentlandite, Pyrolusite, Scheelite, Sperrylite, Sphalerite, Uraninite (pitchblende), Wolframite, or low reactivity metals in their native form such as native gold, silver, or platinum. In one aspect of the current invention, the metal bearing material or mineral concentrate contains a noble metal. In one aspect of the current invention, the metal bearing material or mineral concentrate contains a precious metal. In one aspect of the current invention, the metal bearing material or mineral concentrate contains copper. In one aspect of the current invention, the metal bearing material or mineral concentrate contains silver. In one aspect of the current invention, the metal bearing material or mineral concentrate contains gold.

In some aspects of the present invention, sulfide mineral concentrates originating from the gravitational concentration process of metal sulfides are used. It is desirable that the size of the particles of the concentrate lie between 20 to 60 micrometers (averaging between 35 and 45 micrometers) and have a water content between 7% and 12%. Once the concentrate is mixed with a liquid, typically acidified water, or an acid, and/or a microbiological inoculum, it is called pulp. Preferably the liquid is a mix of water and sulfuric acid and most preferably also contains a microbiological inoculum.

The current invention is particularly suitable for the treatment of concentrates of chalcopyrite, covellite, chalcocite, enargite, and refactory gold sulfides, among others.

In the context of the current invention, impurities may relate to any additional materials beyond the pure metal ore that may be present in various quantities in the mineral concentrate. Calcerous materials are an especially significant impurity due to their ubiquity in the Earth's crust and their chemico-physical properties which can reduce the efficiency of leaching operations. Various impurities may be considered undesirable because under typical conditions found in leaching and bioleaching processes.they for example are soluble enough to enter the irrigation solution where they either accumulate upon recycling or must be disposed of as part of processing the waste stream, or they may engage in chemical reactions to form solid deposits that reduce the efficiency of the leaching operation and/or subsequent downstream process such as recycling the support particles.

### Acid curing

Acid curing is a pre-treatment process where commercial concentrated acid is added to the minerals. In this stage, the acid is distributed in a homogeneous manner to all the mineral so as to increase the kinetics of leaching. The acid is chemically pre-treated to improve the kinetics of metal dissolution and inhibit the dissolution of silica and act as a binding agent among the particles. Thus the chemical leaching and bioleaching processes of metal sulfides for example, may require the addition of large quantities of sulfuric acid to ensure that the formation of colloidal silica is not triggered in the interior of the packed bed and as a consequence avoids the canalization and flooding in sectors of a reactor or heap. In addition, it allows that the oxidized species are soaked with sulfate as a way to achieve the mobility of these in a solution as sulfated species, since the extraction of the valuable metal contained require acid equivalents. This technology generates a homogenous pulp with a high quantity of acid in the concentrate (usually between 20 and 50% of the total acid equivalents are required for the total dissolution of these species); the rest of the acid equivalents are added to the required solutions to facilitate the agglomeration process of the pulp over the support and to the leaching solution used for irrigation in the reactor or heap leaching.

Optionally, sulfation may be performed after acid curing of the mineral concentrate. Sulfation is a process in which the oxidized metals formed curing the acid curing of the mineral complexed in its sulphate form, hydrating itself and increasing its solubility.

### Biooxidation

Biooxidation is the oxidation of the host mineral ore that contains the metallic component of interest, through the use of microorganisms. In the context of aspects of the current invention, biooxidation may be performed as a pretreatment prior to agglomeration, as a pretreatment performed on agglomerates prior to leaching, or as a co-treatment on agglomerates undergoing a leaching process step.

### Agglomeration

In order to have optimum contact between the surface of the particle and the leaching solution, it is necessary that a thin layer of concentrate binds to the polymeric support. For example, the adhesion may be achieved by contacting the polymeric support directly with crushed or powdered mineral or pretreated mineral (such as an acid cured mineral), or by contacting the polymeric support with a mineral pulp. The contacting may be performed in any device capable of bringing the mineral and the agglomeration support into contact with each other, preferable with pressure upon contact. In one aspect of the invention the device capable of bringing the mineral and the agglomeration support into contact with each other is a rotatory device, preferably a rotary drum. This technology has flexibility in that the supports used may either be of one size or of a narrow distribution of sizes, it avoids material segregation in the drum and consequently agglomerates of uniform size and humidity are achieved. This uniformity gives the agglomerates favorable attributes for their transportation, handling, piling and mechanical behavior in the leaching stage. Indeed, the formation of agglomerates is fundamental to making leaching heaps/reactors permeable to irrigation solutions when the mineral to be leached is present in a form comprising high levels of fine particles. As such, the use of agglomeration techniques within the current invention is particularly preferred when the mineral to be leached has been collected as waste dust or powder, such as from various stages in the mining and refining of metal ores, or when the mineral deposits containing the metal ores are naturally present as a clay, sand, silt, etc.

Preferably the physical-chemical properties of both the concentrate and support are optimized, encouraging excellent adhesion of a thin layer of concentrate to be achieved due to the pulp concentrate being in solution with high ionic charge.

An agglomerate is the result of the agglomeration process, and consists of a population of particles of an agglomeration support (such as a rounded polymer) each of which is at least partially covered (preferably surrounded) by a thin layer of adhered mineral concentrate, pulp, or pretreated mineral concentrate.

### Leaching

Leaching is the dissolution of metals from its mineral ore through the action of a solution. In aspects of the current invention, the leaching may be chemical leaching or bioleaching, or a combination or hybrid of these either carried out consecutively or simultaneously. Within the context of this art, "irrigation" refers to the process of applying a solution to a heap or reactor. In some aspects of the current invention, the leaching solution may additionally contain one or more of the following additional components: a chelating agent, a substance to modifying the oxidation-reduction potential of the leaching solution, an acid to lower the pH of the leaching solution. Preferred chelating agents are amines of Schiff bases.

### Chemical leaching

Chemical leaching is the use of one or more chemicals to selectively dissolve or destabilize a component within a metal ore or mineral concentrate. The leaching chemicals may target the pure metal ore itself. The leaching chemicals may target other elements, salts or compounds within the mineral concentrate, or impurities co-extracted with an impure ore or mineral concentrate. The leaching chemicals may be added to a leaching system as pure chemicals, diluted or blended with other chemicals, or generated by biological action within the heap/reactor.

### Bioleaching

Bioleaching is the extraction of minerals from its mineral source through microbial action (fungal, bacterial, archaea, or combinations thereof). In preferred aspects of the current invention, the bioleaching is performed by microbial action, most preferably through the presence of a number of acidophilic mesophilic bacteria and/or thermophilic bacteria and/or extreme thermophilic bacteria. Such bacteria are able to survive at temperatures between 20 and 100°C. In another aspect of the invention the microbial leaching agents are able to survive between 20 and 100°C. In another aspect of the invention the microbial leaching agents are able to survive between 30 and 100°C. In another aspect of the invention the microbial leaching agents are able to survive between 40 and 100°C. In another aspect of the invention the microbial leaching agents are able to survive between 50 and 100°C. In another aspect of the invention the microbial leaching agents are able to survive between 60 and 100°C. In another aspect of the invention the microbial leaching agents are able to survive between 70 and 100°C. In another aspect of the invention the microbial leaching agents are able to survive between 80 and 100°C. In another aspect of the invention the microbial leaching agents are able to survive between 90 and 100°C. In aspects of the present invention, the microbial leaching agents are able to survive within the pH range of pH 5 to pH 0.2. In another aspect of the invention the microbial leaching agents are able to survive within the pH range of pH 4.5 to pH 0.2. In another aspect of the invention the microbial leaching agents are able to survive within the pH range of pH 4 to pH 0.2. In another aspect of the invention the microbial leaching agents are able to survive within the pH range of pH 3.5 to pH 0.2. In another aspect of the invention the microbial leaching agents are able to survive within the pH range of pH 3 to pH 0.2. In another aspect of the invention the microbial leaching agents are able to survive within the pH range of pH 2.5 to p H0.2. In another aspect of the invention the microbial leaching agents are able to survive within the pH range of pH 2 to pH 0.2. In another aspect of the invention the microbial leaching agents are able to survive within the pH range of pH 1.5 to pH 0.2. In another aspect of the invention the microbial leaching agents are able to survive within the pH range of pH 1 to pH 0.2. In another aspect of the invention the microbial leaching agents are able to survive within the pH range of pH 0.8 to pH 0.2. In another aspect of the invention the microbial leaching agents are able to survive within the pH range of pH 0.6 to pH 0.2. In another aspect of the invention the microbial leaching agents are able to survive within the pH range of pH 0.4 to pH 0.2. In aspects of the current invention the biological leaching agents or bioxidising agents comprises one or more of the following speciies: *Acidithiobacillus ferrooxidans, A. thiooxidans* or *Leptospirillum, Acidianus brierley, A. thermosulfooxidans, Sulfubacillus thermosulfoxidans.*

### Reactor configurations

The current invention is suitable for use in a variety of reactor configurations including but not limited to heaps, stirred-tank reactors, fixed-bed reactors and column reactors. The reactor is fundamentally a storage container for the support particles of the current invention at least partially coated in a metal bearing substance, metal ore, or mineral concentrate.

Heaps. For the treatment of low grade tailings, heaps are preferred over stirred-tank type reactors. The tailings are placed on an impermeable base and an adequate amount of leaching solution is added. This acidic solutions percolates through the tailings allowing the bacteria to transform the ferrous ions to ferric ions and generating acid for the dissolution and solubilization of the mineral. These heaps can be aerated passively or actively (jointly with a flow of liquid or through tubes in the bottom of the heap). A heap pad is a prepared area for piling a heap upon. A heap pad normally exhibits a slight incline (such as approximately a 3% incline), a layer of sand, an impermeable polyethylene liner, drain ducts, a layer of gravel, a drain canal; and ducts for a system of aeration in bioleaching can be included.

Stirred-tank reactors. This configuration requires that the reactors be fed with air using distributors that allow the maximum area of gas-liquid mass transfer. They are more efficient than heap reactors, taking a matter of days instead of weeks or months in the case of heap reactors. One serious disadvantage is that the amount of solid that can be maintained in suspension is often practically limited to approximately 5% and certainly no more than 25%. In addition, it has a high maintenance cost in comparison to heap reactors, so only minerals of high value, such as gold-bearing concentrates, are treated in such reactors. These type of reactors have not proved to be economically feasible in treating metal concentrates such as chalcopyrite (CuFeS₂) or enargite (Cu₃AsS₄) which require temperatures of 75 - 80°C.

Column reactors. Column reactors are vertically oriented reactors in which the support (preferably support particles) can be stacked, and irrigation solution, bioleaching inoculate, and so on can be entered in the uppermost section of the column and leachate can be collected at the bottom of the column. Optionally, gaseous substances may be entered from the base of the column to bubble up through the support matrix.

Fixed bed reactors. Fixed bed reactors are substantially horizontal reactors with greater length than height that are often present on a substantially flat horizontal base or a very slight incline.

### Pregnant liquid solution (PLS)

The leachate solution rich in the metals of interest (Pregnant Liquid Solution, PLS), such as copper, that is obtain from the reactor is collected for the subsequent recovery of the metal, normally via solvent extraction and electrodeposition techniques. Whilst PLS is a solution loaded, preferably saturated with the valuable metal of interest (either as ions or a soluble salt), an ILS is a median charged solution coming from partially exhausted leaching reactors. The valuable metal content of a leachate ILS is monitored to determine when a reactor is exhausted.

In some aspects of the current invention, the metals can be recovered from the leachate solution by cementation techniques using redox reactions (for example the addition of scrap iron can be used to bring copper out of solution). In some aspects of the current invention, the metals can be recovered from the leachate solution by electrodeposition. Electrodeposition is an electrochemical process in which the dissolved metal in a charged electrolyte is converted into its metallic form through the application of a continuous current (typically 300 A/m²) forming a metallic cathode. A charged electrolyte is an aqueous solution of concentrated metal (e.g. copper at a concentration of 30 g/L), that feeds the electrodeposition process. In some aspects of the current invention, the metals can be recovered from the leachate solution by solvent extraction (SX), which is a process of concentration and purification of dissolved metals in an aqueous solution by passing it through a selective matrix (for example and organic matrix) for the metal. Other methods of extracting metal from the leachate suitable for use with the current invention include precipitation, ion exchange, electrowinning, and gas reduction.

Following extraction of the metals from the leachate (i.e. from the solution drained from the reactor) the resulting solution is referred to as the "Refine solution". It is an object of some aspects of the current invention that the refine solution require minimal further processing before it can be recycled for use as an irrigation solution in a reactor or safely disposed of as a waste stream.

### EXPERIMENTAL

During the development of the current invention, the physicochemical properties of polypropylene were evaluated to confirm that it is suitable as a high performing support matrix for this application area.

The wetting of the polypropylene and of a concentrate of copper chalcopyrite were performed via the film-flotation technique. The critical surface tension, which determines the degree of wetting of both materials, was determined by observing that the polypropylene gets wet only at surface tensions under 23mN/m, displaying a highly hydrophobic character. On the other hand, in the case of a concentrate rich in chalcopyrite a critical surface tension was observed to be 44mN/m that corresponds to a contact angle of 56.63°, which are very close to the contact angle values found in industrial concentrates. Without wishing to be bound by theory, the adhesion phenomenon of the first layer of the concentrate on the polypropylene particles may be explained by the forces and the interaction energy between the particles of the concentrate and those of the polypropylene, based on the Born-DLVO Theory assuming a non-saturated porous medium; such as one configuration proposed in the present invention. The concentrate particles strongly bind to the surface of the polypropylene at the primary minimum zone and with conditions of high ionic strength in the solution such as are present in the leaching operations of copper minerals. If the ionic strength of the medium decreases, due to either the dilution of the leaching solution or the washing of the particles, the Born-DLVO Theory predicts the release of the concentrate particles due to the repulsion forces between the surfaces. Finally, the adhesion between the concentrate particles in the most outer layers may be explained by the formation of liquid bridges among the particles.

It is thought that ionic strength plays a key role in the adherence, detachment, or removal phenomenon of the concentrate particles on the polymeric support. In general, the solutions used in hydrometallurgic processes have high ion contents in solution that increases the ionic strength, a condition that significantly favors the adhesion of particles on the polypropylene support of the current invention. This can also have other positive effects. For example, there can be particles that transport arsenic, mercury, lead ions and others and that bind to the surface of the particles of the invention, preventing the contamination of the water solutions later in the process. Consequently, since the particles remain in the final residue of the leaching cycle, it is possible to wash them in order to carry out another treatment in later stages to stabilize the dangerous contaminants. This is a very competitive advantage in comparison to the other technologies that use mineral particles as a support material because the control of the heap residuals in these cases is not possible.

It is important to mention the presence of colloidal particles and bacteria in solution. In a fixed-bed reactor, these can approach to the solid-solution interface and the gas-liquid interface by the movement of the solution and by diffusion. In the case that these particles are negatively charged, they will face a repulsive electrostatic interaction, not only with other particles such as clay, sediment and bacteria, but also with the charge in the gas-liquid interphase. The hydrodynamic forces within the current system can overcome the repulsive barrier of the electrostatic interaction and allow the bonding of very small particles in the gas-solution interphase. It is believed that in this condition, the forces of interaction of van de Waals begin to act, which are the function of the thermodynamic properties of the concentrate particles as well as of the leaching solution.

The desired thickness of the pulp adhered to the matrix ranges from 0.5 mm to 4 mm. It is preferable that the wet agglomerate be 1 mm to 2 mm thick. Since the support particles are of a granulometric distribution of known and fixed sizes, the present invention proposes a very convenient solution to the problem of achieving a very efficient porosity of the packed bed among particles, which allows for the adequate circulation of the irrigating solution throughout the heap. This significantly improves the total kinetics of the process due to the increase of the effective diffusion velocity of the different species in the core of the phases and through the increase in mass transfer in the gas-liquid and liquid-solid interphases. This permits that the resistance control of the diffusion and the mass transfer are minimized on the total kinetics.

There are various technologies that deal with the agglomeration problem of fines on larger particles to improve the percolation properties of the solutions in the bed of the leaching reactors in heaps, such as the agglomeration drum (Pudahuel mine), and others such as patent US 6,083,730 whose process describes the agglomeration of metal sulfides on a rock support of large size. The present invention replaces the rock support with a synthetic support that encourages the concentrate particles to agglomerate around it and does not permit the leaching of secondary components such as are present in the case of a rock supports. In this way, the risks of poisoning or inhibiting the function of biological components employed in some aspects of the current invention, which are responsible for maintaining the metabolic activity in the bed of the reactor, are avoided.

Another advantage of the current invention is that no additional investment is required to treat the solutions because a synthetic support is used instead of a mineral one. Furthermore, this selectivity of acid substrate minimizes the acid consumption, leading to even further substantial savings in operating costs. Moreover, the use of a stable plastic support matrix, such as polypropylene, allows that the species which did not react in the leaching reactor may be washed and recovered. This permits the recycling and/or monetization of unreacted components of the waste streams compared to the previous use of other technologies. In addition, by using a plastic matrix of low density, this technology decreases the energy costs in terms of transport and load in the operation, observed as savings of around 56% in the specific consumption of energy in comparison with a system using a mineral support.

In addition to having mechanical and thermal properties which makes the synthetic support resistant to the forces of traction and compression, the support material is characterized as having excellent resistance to abrasion and being resistant to corrosive solutions and high temperatures typically encouraged when employing the bioleaching potential of hyperthermophilic microorganisms (close to 80 °C).

Column reactors were used as bank scale reactors in this study and allow validation of leaching processes in unsaturated packed bed type reactors. The configuration of the reactors in columns corresponds to a vertical cylindrical column made of plastic material. The columns used in this study had a height of 2 to 6 m and an internal diameter of 14 cm and were heated via an electric coat controlled by a thermocouple. The temperature of the bed of the column was measure by the insertion of a thermometer through the wall of the column to gain access to the material inside. The columns are normally made of polyethylene or polypropylene tubes. The column is mounted on a system of supports and was loaded with the agglomerated material to be leached at the superior part. The irrigation solution was poured in at the uppermost part so as to percolate throughout the packed bed. The base of the column rested on a support system of packed material, below which, there was a space that allowed the collection of the percolated solutions for immediate characterization of their pH, Eh, total Fe concentrations, Cu and free acid. Air was injected into the column from the inferior zone of the column so as to supply the necessary gases. The air was forced to spread through packed material in the bed of the column, using a hose with a loop in the inferior part of the column which allowed the leaching solutions to leave. This configuration acts as a hydraulic seal that prevents that the forced air inside of the column escape from this way.

### Leaching solution

The leaching solution may comprise water, sulfuric acid, and a culture of one or more species of microorganisms in suspension in a solution of H₂SO₄ 10g/L and pH between 1 and 2.5. Preferred microorganisms, suitable for use in leaching processes in aspects of the current invention include but are not limited to *Acidithiobacillus ferrooxidans, Sulfolobus acidocalodarius, Acidianus brierleyi, Sulfolobus metallicus, Leptospirillum ferrooxidans, Thiobacillus thiooxidans* without excluding others. Once the leaching reactor is prepared, this solution is defined as the "irrigation solution" since it can be reapplied to the heap or reactor as many times as is required. The agglomeration process starts with a pulp of the concentrates in a strong acidic solution, optionally with microorganism innoculate, and/or very acidic solutions containing high concentrations of chloride ions (such as can be provided by dissolving NaCl and/or CaCl₂). The pulp preferably comprises a solid/solution weight ratio between 75 and 80% wt/wt solids.

The acid curing technique can also be used since the leaching processes requires the sulfation of the metallic species contained, with the purpose to make the species soluble in aqueous mediums. Agglomeration with high loads of acid is thought to encourage the accelerated sequential recovery of valuable metals (such as copper) in the leaching stage.

The inoculation of bioleaching agents as part of some aspects of the current invention can be carried out by addition to one or more of the pulp solution, the initial form of the irrigation solution, or jointly with the addition of the partially used irrigation solution (i.e. between collection at the nase of the reactor/heap and redeployment to the top of the same or another reactor/heap) during any or all leaching cycles.

### Reclamation of the heap

Once the time dedicated to the leaching of the mineral or the agglomerated concentrate piled over the pad of the heap leaching, the systems of irrigation, either sprinklers or droppers and above, are removed and the work to remove the piled material to tailing dumps, where the piled material can still be subject to irrigation but under condition of much less control with respect to what was accustomed in the heap leaching. There are different mechanisms and equipment used in the task of lifting the heap of the leaching but it depends to a great extent the size of the operation in question. In particular, the use of a buck-wheel reclaimer, normally associated to conveyor belt systems, can be mentioned to transport the tailing to its containment site, or the use of bulldozers normally associated with transportation systems using dump trucks.

Given the low density of the agglomeration support proposed in the present invention, the cost and energy required to lift the material already processed in the heap or reactor is estimated to be improved significantly in terms of the wear and tear of the equipment and the overall energy efficiency of the process.

### Washing and recirculation of the agglomeration support

In the heap leaching process and except in the case proposed by the GEOCOAT technology in which the concentrate associated to a rock particle support as its agglomeration substrate for the concentrates is processed, the minerals already processed are taken to their final destination site or leaching tailing dumps.

In the present invention, the treated material passes through a washing stage that occurs in a Trommel type washer. Through the rotating mechanic action and added washing solution, the fine particles of the concentrate that did not react or the precipitates formed in the leaching stage detach from the support particles. The idea of this stage is to separate the fine particles from the big ones which holds them as a means, on one hand, to recover the valuable metals contained in the non-reacted concentrates, and on the other hand, to recover the big particles to reuse them in a new leaching cycle.

Due to the low density of the support matrix proposed in this invention, the washing and separation of the non-reacted particles from the support matrix stage is greatly facilitated, resulting in improvements in the efficiency of the process and lower operating costs.

### EXAMPLES

### Example 1: Physicochemical properties of the polypropylene support

The support particles were made of polypropylene, having a diameter between 3 and 20 mm. Said material was resistant to deformation and degradation at temperatures up to at least 100°C.
- Tests were made to the support by placing it in an environment of pH 0.2, and verifying that it did not suffer any physical or chemical modifications.
- It was inert to the action of the microorganisms typically used in bioleaching and biooxidation.
- For a recovery test of the support, the polypropylene support, after its use, proved to be easily recoverable by washing it with water due to its low density and good flowability.
- Load tests established the ratio of the concentrate that can effectively be agglomerated on the plastic support particle. For these tests, two types of polypropylene support matrices were used, one in the shape of a pellet (cylindrical) between 2 and 5 mm in diameter, and the other in the form of spheres of a diameter of 20 mm.

The concentrate to be agglomerated, previously pulped via the addition of a water solution acidulated with 10 g/L of sulfuric acid, to a final concentration of 80% of solids was added to a known weight and volume of a dry plastic matrix that acted as a support. The final result was a ratio of load of concentrate to support between 0.5 to 0.8 w/w.

### Example 2: Leaching of Chalcopyrite Sulfide in a column

The agglomeration process was carried out in agglomeration drums wherein acid in the range of 40 to 60 kg of acid/ton of concentrate, water in the range of 60 to 90 kg/ton of concentrate and active viable bacterial inoculum were added. The rotation velocity fluctuated between 5 to 15 rpm and the residence time varied between 1 to 3 minutes until the thickness of the adhered concentrate reach 1 to 4 mm. The particles with previous agglomeration were loaded into polypropylene columns such that a homogeneous packed bed was generated. Fresh leaching solution was made to circulate above this bed. The column operated continuously and the leaching solution was poured at the center of the top of the column at a surface velocity in a range from 7 to 20 L/hm². The solution contained 35 to 45 mg/L of (NH₄)₂SO₄, 35 to 45 mg/L of MgSO_{4*}7H₂O and 35 to 45 mg/L of K₂HPO₄. This configuration achieved the optimal conditions of momentum transport, heat and mass for each support particle.

After several hours of chemical leaching with H₂SO₄, a fresh solution, containing ferrous ion at concentrations between 1 and 2.5 g/L, was introduced to the top part of the columns. The pH and the potential Eh of the solution was measured regularly, as well as the concentrations of Fe³⁺ and Fe²⁺, total copper, free acid and the concentration of bacteria in the solution. The leaching columns were maintained in operation for 320 days. Air was administered at the base of each column with a compression bolt. This air penetrated at the base of the column via forced convection.

Results: Recovery above 90% of Cu, above 55% of FE, in 320 days and negative net consumption of acid.

### Example 3: Agglomeraction with inoculum.

During the agglomeration stage, the concentrates repulped in acid and water where inoculated with a mixed culture of sulfide-oxidizing bacteria of an extreme thermophilic nature. This culture had been previously used in bioleaching in mineral and copper sulfide concentrate bioreactors. The culture contained species including *Acidothiobacillus ferrooxidans, Sulfobacillus metallicus, Acidianus sp, Leptospirillum sp, among others.*

The culture was grown with samples from different sources. Some were obtained from hot spring environments and at temperatures of 68°C and supplemented with yeast extract of 0.2%. The substrate for the growth of these bacteria was mineral concentrate finely divided of Pucobre, and were placed in different shake flasks 5% wt/v in 0K basal medium, supplemented with yeast extract of 0.2% wt/v to serve as the inoculum for the columns. These initial inocula were first grown up in 30 L stir tanks, 5% p/v of mineral concentrate in 0K basal medium supplemented with yeast extract 0.2%. The volume of the operation was maintained at 70°C and stirred at 200 rpm with a blade mechanical stirrer and aerated at a rate of 3 L/min. To inoculate each column, a inoculum with a population of around 10⁸ to 10⁹ bacteria/mL was used, resulting in a final culture population density in the order of 10⁷ to10⁸ bacteria/g of mineral concentrate. To maintain a scalable *hold up* in each column, a ratio of 0.5 to 0.8 kg of concentrate/support mass was used.

### Example 4: Leaching with different supports and leaching mediums

Tests were carried out in 6 columns 2 m tall. Tests were carried out for 150 days for tests in a chloride medium (columns 1, 3, 4), and 300 days for biological mediums (columns 2, 5, 6).

All the experiments were maintained at a pH less than 2 via the addition of concentrated sulfuric acid to the irrigation solution. Once the pH of the exiting solutions stabilized under this value, the pH was not readjusted.

The conditions applied, the type of support used and the percentages of recovery are shown on the following table (Table 2).

**Table 2**

| | | | | | | Fresh Supply (Kg) | | Gravel (Kg) | | Head | | Gravel | | Recovery (%) | |
|---|---|---|---|---|---|---|---|---|---|---|---|---|---|---|---|
| Column | Matrix | Condition | Irrigation Rate (L/h/m²) | Aeration Rate (L/min) | Temperature (°C) | Concentrate | Matrix | Concentrate | Matrix | Cu Grade (%) | Fe Grade (%) | Cu Grade (%) | Fe Grade (%) | Cu | Fe |
| | Pellets | NaCl + CaCl₂ | 12 | 4 | 20 | 11.3 | 14.0 | 8.3 | 13.8 | 27.3 | 0.0 | 19.0 | 28.6 | 9.3 | 0.4 |
| | Pellets | NaCl + CaCl₂ | 12 | 4 | 20 | 13.0 | 13.0 | 9.6 | 12.9 | 27.3 | 0.0 | 16.9 | 25.3 | 4.4 | 7.6 |
| | Spheres | NaCl | 12 | 4 | 20 | 5.7 | 3.2 | 4.8 | 3.1 | 27.3 | 0.0 | 22.5 | 29.0 | 0.5 | 8.1 |
| | | | | | | | | | | | | | | | |

| | | | | | | Fresh Supply (Kg) | | Gravel (Kg) | | Head | | Gravel | | Recovery (%) | |
|---|---|---|---|---|---|---|---|---|---|---|---|---|---|---|---|
| Column | Matrix | Condition | Irrigation Rate (L/h/m²) | Aeration Rate (L/min) | Temperature (°C) | Concentrate | Matrix | Concentrate | Matrix | Cu Grade (%) | Fe Grad e (%) | Cu Grade (%) | Fe Grade (%) | Cu | Fe |
| | Pellets | Bacteria | 12 | 4 | 55 | 11.8 | 12.7 | 3.2 | 12.5 | 27.3 | 0.0 | 12.1 | 26.4 | 7.9 | 6.0 |
| * | Spheres | Bacteria | 12 | 4 | 50 | 8.4 | 3.4 | 3.8 | 3.3 | 27.3 | 0.0 | 5.9 | 23.6 | 0.2 | 4.4 |
| * | Spheres | Bacteria | 12 | 4 | 52 | 8.6 | 3.4 | 4.2 | 3.3 | 27.3 | 0.0 | 6.9 | 23.6 | 7.7 | 1.6 |

| | | | | | | | | | | | | | | | |
|---|---|---|---|---|---|---|---|---|---|---|---|---|---|---|---|
| * C5 and C6 are duplicated | | | | | | | | | | | | | | | |

The given grades of head and gravel feeding of the first set of test in columns were obtained by an average of the results obtained in 4 different laboratories. These packages, given to the laboratories, were prepared by an external company (IDICTEC) where selections were made for the delivery of samples. Samplings were carried out by rifle and, then, cone and quartering. The samples were sent to the laboratories GEOLAQUIM, SGS, IDICTEC and an internal laboratory.

### Example 5: Washing and recovery of the polymeric support

After the end of leaching, the support is washed with water in the rotary drum, freeing all the adhered elements and leaving the support clean and available for the next operation cycle.

The residual concentrate recovered can be subsequently processed to obtain the valuable contents in it or adequately disposed of in cases where there is no economic value.

## Claims

1. A leaching method of metal bearing material or metal mineral concentrates comprising the steps:
a. Adhering mineral concentrates or a metal bearing material in a stable manner to a support to form agglomerates; wherein said support is **characterized in that** it is made of non porous polypropylene particles between 3 and 20 mm, of specific gravity less than 1, stable in strongly acidic solutions of pH1 - pH4, resistant to abrasion, and does not deform at temperatures up to 60°C;b. Transporting the agglomerates to a processing site;
c. Loading the agglomerates onto a packed bed reactor or forming a heap of agglomerates;
d. Leaching the mineral concentrate or metal bearing material by irrigating with chemical and/or biological agents present in an acidic solution;
e. Optionally, supplying forced air to the reactor or heap of agglomerates in a counter-current direction relative to that of the irrigation solution;
f. Recovering the loaded solution or "PLS" that percolated in the reactor or heap for its subsequent treatment;
g. Recovering the solid residuals of the reactor or heap;
h. Separating the residual solids, unleached mineral concentrates and any formed precipitates;
i. Reusing the support in another cycle of the leaching process comprising steps d - h.

2. A leaching method according to -claim 1, wherein the support is **characterized in that** the particles have rounded edges, and are lenticular, cylindrical, discoidal, concave, convex, or spherical in shape.

3. A leaching method according to any of claims 1-2, wherein the particles of said support are hollow or solid.

4. A leaching method according to any of claims 1-2, wherein the particles of said support are at least partially coated in mineral concentrates.

5. A leaching method according to any of claims 1-4, **characterized in that** said method loads between 0.5 and 0.8 kg of mineral concentrate per kilogram of support.

6. A leaching method according to any of claims 1-5, **characterized in that** the packed bed reactor or the heap of agglomerates operates under a non-saturated manner with an irrigation rate of up to 20 L/hm², avoiding preferential flows of the irrigation solution and allowing uniformed flows of air in a counter-current direction.

7. A leaching method according to any of claims 1-6, **characterized in that** the supported mineral concentrate or metal bearing material can be a primary sulfide or a secondary base metal, a mineral rich in noble metals bound to sulfides, an iron concentrate, or a concentrate with high amounts of impurities that make the process more difficult.

8. A leaching method according to claim 1, **characterized in that** biological oxidizing agents and nutrients are added at the agglomeration stage and/or in the irrigation solution.

9. A leaching method according to claim 1, **characterized in that** chemical oxidizing agents can be added at the agglomeration stage and/or in the irrigation solution.

## Patentansprüche

1. Ein Auslaugverfahren für metallhaltiges Material oder metallische Mineralkonzentrate, umfassend die Schritte:
a. Stabiles Verkleben von Mineralkonzentraten oder eines metallhaltigen Materials mit einem Träger um Agglomerate zu bilden; wobei der Träger **dadurch gekennzeichnet ist, dass** er aus nichtporösen Polypropylenpartikeln zwischen 3 und 20 mm mit einem spezifischen Gewicht von weniger als 1 hergestellt ist, stabil in stark sauren Lösungen von pH 1- pH 4 ist, abriebfest ist und sich bei Temperaturen bis zu 60°C nicht verformt;
b. Transportieren der Agglomerate zu einer Verarbeitungsstelle;
c. Füllen der Agglomerate in einen Festbettreaktor oder Bildung einer Anhäufung von Agglomeraten;
d. Auslaugen des Mineralkonzentrats oder des metallhaltigen Materials durch Bewässerung mit chemischen und/oder biologischen Mitteln, die in einer sauren Lösung vorhanden sind;
e. Optional, zuführen von Druckluft in den Reaktor oder in die Anhäufung von Agglomeraten im Gegenstrom zur Bewässerungslösung;
f. Rückgewinnung der beladenen Lösung oder "PLS", die im Reaktor oder in der Anhäufung zur weiteren Behandlung versickert ist;
g. Rückgewinnung der festen Reststoffe des Reaktors oder der Anhäufung;
h. Abtrennung der Restfeststoffe, der unausgelaugten Mineralkonzentrate und jeglicher gebildeter Präzipitate;
i. Wiederverwendung des Trägers in einem anderen Zyklus des Auslaugprozesses, umfassend die Schritte d -h.

2. Ein Auslaugverfahren gemäß Anspruch 1, wobei der Träger **dadurch gekennzeichnet ist, dass** die Partikel abgerundete Kanten aufweisen und linsenförmig, zylindrisch, scheibenförmig, konkav, konvex oder kugelförmig sind.

3. Ein Auslaugverfahren gemäß einem der Ansprüche 1-2, wobei die Partikel jenes Trägers hohl oder fest sind.

4. Ein Auslaugverfahren gemäß einem der Ansprüche 1-2, wobei die Partikel jenes Trägers zumindest teilweise mit Mineralkonzentraten beschichtet sind.

5. Ein Auslaugverfahren gemäß einem der Ansprüche 1-4, **dadurch gekennzeichnet, dass** das Verfahren zwischen 0,5 und 0,8 kg Mineralkonzentrat pro Kilogramm Träger füllt.

6. Ein Auslaugverfahren gemäß einem der Ansprüche 1-5, **dadurch gekennzeichnet, dass** der Festbettreaktor oder die Anhäufung von Agglomeraten ungesättigt mit einer Bewässerungsrate von bis zu 20 l/hm² arbeitet, wobei bevorzugte Ströme der Bewässerungslösung vermieden werden und gleichmäßige Luftströme in Gegenstromrichtung ermöglicht werden.

7. Ein Auslaugverfahren gemäß einem der Ansprüche 1-6, **dadurch gekennzeichnet, dass** das getragene Mineralkonzentrat oder metallhaltige Material ein primäres Sulfid oder ein sekundäres Basismetall, ein edelmetallreiches an Sulfide gebundenes Mineral, ein Eisenkonzentrat oder ein Konzentrat mit hohen Mengen an Verunreinigungen sein kann, die den Prozess erschweren.

8. Ein Auslaugverfahren gemäß Anspruch 1, **dadurch gekennzeichnet, dass** biologische Oxidationsmittel und Nährstoffe in dem Agglomerationsschritt und/oder in der Bewässerungslösung zugegeben werden.

9. Ein Auslaugverfahren gemäß Anspruch 1, **dadurch gekennzeichnet, dass** chemische Oxidationsmittel in dem Agglomerationsschritt und/oder in der Bewässerungslösung zugegeben werden können.

## Revendications

1. Procédé de lixiviation d'un matériau portant un métal ou de concentrés minéraux métalliques, comprenant les étapes consistant à :
a. faire adhérer des concentrés de minéraux ou un matériau portant un métal d'une manière stable à un support pour former des agglomérats ; où ledit support est **caractérisé en ce qu'**il est fait de particules de polypropylène non poreuses de 3 à 20 nm, a une densité inférieure à 1, est stable dans des solutions fortement acides à un pH de 1 à 4, est résistant à l'abrasion, et ne se déforme pas à des températures allant jusqu'à 60°C ;
b. transporter les agglomérats vers un site de traitement ;
c. charger les agglomérats sur un réacteur à lit garni ou former un tas d'agglomérats ;
d. lixivier le concentré minéral ou le matériau portant un métal en irrigant avec des agents chimiques et/ou biologiques présents dans une solution acide ;
e. éventuellement fournir de l'air forcé au réacteur ou au tas d'agglomérats dans une direction à contre-courant par rapport à celle de la solution d'irrigation ;
f. récupérer la solution chargée ou "PLS" qui a percolé dans le réacteur ou le tas pour son traitement subséquent ;
g. récupérer les résidus solides du réacteur ou du tas ;
h. séparer les résidus solides, les concentrés minéraux non lixiviés et de quelconques précipités formés ;
i. réutiliser le support dans un autre cycle du traitement de lixiviation comprenant les étapes d à h.

2. Procédé de lixiviation selon la revendication 1, dans lequel le support est **caractérisé en ce que** les particules ont des bords arrondis, et ont une forme lenticulaire, cylindrique, discoïdale, concave, convexe, ou sphérique.

3. Procédé de lixiviation selon l'une quelconque des revendications 1 et 2, dans lequel les particules dudit support sont creuses ou pleines.

4. Procédé de lixiviation selon l'une quelconque des revendications 1 et 2, dans lequel les particules dudit support sont au moins partiellement enrobées dans des concentrés minéraux.

5. Procédé de lixiviation selon l'une quelconque des revendications 1 à 4, **caractérisé en ce que** ledit procédé charge entre 0,5 et 0,8 kg de concentré minéral par kilogramme de support.

6. Procédé de lixiviation selon l'une quelconque des revendications 1 à 5, **caractérisé en ce que** le réacteur à lit garni ou le tas d'agglomérats fonctionne d'une manière non saturée avec une vitesse d'irrigation allant jusqu'à 20 l/hm², évitant les écoulements préférentiels de la solution d'irrigation et permettant des écoulements rendus uniformes d'air dans une direction à contre-courant.

7. Procédé de lixiviation selon l'une quelconque des revendications 1 à 6, **caractérisé en ce que** le concentré minéral supporté ou le matériau portant un métal peut être un sulfure primaire ou un métal de base secondaire, un minéral riche en métaux nobles liés à des sulfures, un concentré de fer, ou un concentré avec de grandes quantités d'impuretés qui rendent le traitement plus difficile.

8. Procédé de lixiviation selon la revendication 1, **caractérisé en ce que** des agents oxydants biologiques et des nutriments sont ajoutés à l'étape d'agglomération et/ou dans la solution d'irrigation.

9. Procédé de lixiviation selon la revendication 1, **caractérisé en ce que** des agents oxydants chimiques peuvent être ajoutés à l'étape d'agglomération et/ou dans la solution d'irrigation.
